# EUROPEAN PATENT SPECIFICATION

(11) **EP 2 655 265 B1**
(45) Date of publication and mention of the grant of the patent: **08.02.2017**
(21) Application number: 11799155.4
(22) Date of filing: 14.12.2011
(51) Int. Cl.: C02F 1/52, C02F 1/54, C02F 1/56, C02F 1/66

(54) **WATER CLARIFICATION COMPOSITION AND PROCESS**
ZUSAMMENSETZUNG UND VERFAHREN ZUR WASSERKLÄRUNG
COMPOSITION ET PROCESSUS DE CLARIFICATION D'EAU

(30) Priority: 24.12.2010 IN MU35222010; 22.02.2011 EP 11155307
(43) Date of publication of application: 30.10.2013
(73) Proprietor: Unilever N.V., 3013 AL Rotterdam (NL); Unilever PLC, London EC4Y 0DN (GB)
(72) Inventor: BISWAS, Sarmistha, Bangalore 560 066 (IN); CHATTERJEE, Debosree, Bangalore 560 066 (IN); PATHAK, Gaurav, Andheri (East) Mumbai 400 099 (IN); RAJENDIRAN, Ganesan, Bangalore 560 066 (IN); SANKAR, Rachana, Bangalore 560 066 (IN); SHAH, Bijal Dharmvirbhai, Bangalore 560 066 (IN); SHRESTH, Rudra Saurabh, Bangalore 560 066 (IN); THIRUMENI, Dhanalakshmi, Bangalore 560 066 (IN)
(74) Representative: van Benthum, Wilhelmus A. J.
(86) International application number: PCT/EP2011/072684
(87) International publication number: WO 2012/084622

(56) References cited:
- WO-A2-2005/003041

## Description

### Field of the invention

The present invention is in the field of water purification compositions and processes. In particular the invention relates to the clarification of laundry wash and/or rinse liquor for water saving by re-use.

### Background of the invention

Water is becoming a more and more scarcely available commodity, especially in developing countries, where it is not unusual that people have to walk many kilometres to arrive at a water source.

Washing processes, including laundry, dishwashing and other household cleaning processes, require large amounts of water throughout the world. The discarded water is a burden to waste water treatment facilities, or to the surface water supply in developing countries.

One way of saving water is to reuse the water. To be able to reuse household water, especially laundry wash water, for the next household washing or cleaning purpose, especially the next laundry wash or laundry rinse, it is required to remove at the very least undissolved materials, remove surfactant remains, alkalinity and discolouration of the water.

Several water purification processes have been disclosed in the art.

Drinking water purification processes are for instance disclosed in Indian application 918/MUM/2000, or WO2008/092724, both of Unilever. Such systems typically make use of flocculant material to flocculate material out of the solution and a coagulant material to coagulate particles into bigger agglomerates that are easier to separate. Further more, such compositions comprise some inorganic insoluble compound to act as a seed for flocculation on the one hand and as weight to make the flocs settle faster on the other hand.

Drinking water purification is highly complicated as it requires a product that is suitable for human consumption and should therefore contain very low amounts of bacteria, virus and cyst. It is therefore quite expensive, and the consumer accepts that it takes time to process.

For the simple use of water for washing Laundry in developing countries, or the cleaning of other household substrates, the requirement of removal of bacteria, virus and cyst can be less stringent while the removal of surfactant is required as the recycled water will be used in subsequent wash processes and surfactant build up is not preferred. Moreover consumers would want to re-use the water of a laundry wash liquor, for the subsequent rinse, or more typically to re-use the water of the first laundry rinse for the second laundry rinse, or even to reuse the final laundry rinse water for another household purpose they do not want to wait for an hour or half an hour to process the water. Therefore to avoid the long waiting period in between each wash stage, it is desirable to treat the water in much shorter time period.

Other applications of water purification methods are typically found in the area of industrial waste water purification. Various industries, including chemical manufacturing waste, waste from dairies and canneries, distillery waste, fermentation waste, waste from paper manufacturing plants, waste from dyeing plants and waste water from sewage and sludge treatment. US2006016761, Ciba, discloses a method of dewatering suspensions in which a high molecular weight, water soluble, cationic polymer flocculant and an encapsulated low molecular weight water soluble, coagulant are mixed with the suspension. According to US2006016761, the coagulant is not released into the suspension until flocculation has taken place.

These processes typically required large water treatment plants and like for drinking water purification, it may take time to process.

A fast water purification and clarification process for the treatment of household water, especially laundry wash and more typically laundry rinse water remains to be desired.

It is therefore an object of the present invention to provide water saving in household process, especially laundry processes, especially hand wash.

It is a further object of the invention to provide a simple water purification composition that can be added straight into a bucket containing the dirty water.

It is yet another object of the invention that the clarification is achieved in less than 15 minutes, more preferably less than 10 minutes, still more preferably less than 5 minutes, and ideally in 2 to 3 minutes.

It is yet another object of the invention that the composition not only clarifies the water, but also removes surfactants in the same time.

It is yet another object of the invention that the composition further reduces the alkalinity of the composition.

It is yet another object of the invention that the composition is a single composition and does not require the consumer to dose different compositions and/or dose different components in a specific order.

Surprisingly we have found that a composition comprising flocculant, coagulant, filler and cationic surfactant provides effective water clarification and purification.

### Summary of the invention

Accordingly, the present invention provides a water purification composition comprising 30-70% by weight of an electrolyte flocculant selected from aluminium and ferric salts, 0.5-5% by weight of a neutral and/or anionically modified polymer coagulant (MW > 100 kD), 15-35% by weight of an inorganic filler, having a density of at least 1.5 kg/dm³; and 20-40% by weight of a solution of a quaternary ammonium cationic surfactant and/or polymers of quaternary ammonium compounds.

In another aspect the invention provides Process for water purification of wash water comprising the steps of dosing 0.3 - 2 g of the composition according to claim 1 per liter of wash water; stirring for at least 10 sec; leaving the particle to settle; separate the particles from the water.

In a third aspect the invention provides a kit comprising a bucket; a separator plate configuration; at least one dose of the composition of the invention; and instructions for use.

In the context of the present invention by the term "floc" is meant materials aggregated in to a flocculent mass.

In the context of the present invention by the term "wash water" is meant any household cleaning water, typically laundry wash water (also referred to as wash liquor), more specifically laundry rinse water (also referred to as rinse liquor).

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

The present invention provides a water purification composition and a process for the purification of wash water.

### Water purification composition

The water purification composition according to the invention comprises an electrolyte, a polymer, an inorganic filler, a solution of a quaternary ammonium cationic surfactant and/or polymers of quaternary ammonium compounds.

### Electrolyte flocculant

The electrolyte may be any Al or/and Fe salt. They may be in pre-hydrolyzed form of bacisity (B). It is preferred that the basicity (B = AI/OH) is from 10 to 90, more preferably the basicity is in the range of 40-80.

For Al-salts the minimum solubility of Al-hydroxide is typically in the pH range of 6.8-7.5 whereas minimum solubility of Fe-hydroxide typically ranges from pH 4-8. Furthermore, the amount of solid precipitate generated in case of the system treated with Fe-salts is high as the solubility of Fe-hydroxide is lower than Al-hydroxide in the above stated respective pH ranges. This may be used to tune the precipitation kinetics, for instance by means of using combinations of the Al and Fe electrolyte salts. Thus system treated with Fe-salts would also require the pH to be controlled less minutely and hence is more robust. However the residual dissolved Fe-salts impart colour to the water which may have a negative impact on laundry fabrics and hence is less preferred.

Without wishing to be bound by a theory, it is though that the electrolyte flocculants cause particle aggregation by mainly two well-known mechanisms which include charge neutralization and sweep flocculation. The concentration of electrolyte employed in the system regulates the mechanism involved in the process. If the electrolyte is added at a very low concentration which is lower than the solubility limit of the electrolyte, charge neutralization mechanism takes place, in which the surface charge of particles get neutralized by the oppositely charged ions of electrolyte added in the system and thereby reduces the electrostatic repulsion in between particles and promotes the particle aggregation. When electrolyte is added in excess, it undergoes hydrolysis reaction and as a result Al(OH)₃ or Fe(OH)₃ precipitates out and releases a proton. The released proton helps in reducing the alkalinity of laundry liquor and brings the pH close to neutral. Furthermore, this Al(OH)₃ or Fe(OH)₃ particles form a porous network structure into which particles get entrapped, and as this matrix settles down the particles are swept away from the system. In presence of surfactant the charge neutralization is less likely to occur, as an adsorbed surfactant layer on Al(OH)₃ or Fe(OH)₃ particles inhibits aggregation of particles by imparting steric stabilization. This is found that in case of sweep flocculation the in-situ generated Al(OH)₃ or Fe(OH)₃ is thought to deplete surfactant from the wash or rinse liquor. It is understood that the surfactant gets depleted by adsorbing on the surface of positively charged Al(OH)₃ or Fe(OH)₃ particles. Therefore Sweep flocculation is the preferred route for the particle aggregation, for laundry liquor containing both surfactants and alkalinity.

The electrolyte flocculant is present in the composition in a concentration of 30 to 70% by weight. The electrolyte flocculant is preferably present in a concentration of at least 35% by weight, more preferably at least 40% by weight and still more preferably at least 45% by weight of the composition. The electrolyte flocculant is preferably present in a concentration of not more than 65% by weight, more preferably not more than 60% by weight and still more preferably not more than 55% by weight of the composition.

The electrolyte composition may be a solid composition, a liquid composition, or anything in between, including pastes and gels.

### Polymer coagulant

By polymer coagulant is meant high molecular weight adsorbing neutral or ionically modified polymers e.g. polyacrylamide.

The process of sweep flocculation destabilizes and sweeps away the particles from a dispersion as it settles, however the kinetics of settling is very slow. Furthermore, the settled mass of the floc is loose in nature, and thus holds lot of water within its structure. In some systems this may hamper the water recovery efficiency. This problem is solved by addition of a polymer, preferably a long chain polymer. The polymers are thought to adsorb on particle surfaces and thereby bring them together to form bigger and stronger flocs. This phenomenon is known as bridging flocculation. This bridging mechanism helps in increasing the settling velocity of the flocs, helps in faster clarification of water and also increases water recovery efficiency.

The polymer coagulant is present in the composition in a concentration of 0.5 to 5% by weight. The polymer coagulant is preferably present in a concentration of at least 1% by weight, more preferably at least 1.5% by weight and still more preferably at least 2% by weight of the composition. The polymer coagulant is preferably present in a concentration of not more than 4.5% by weight, more preferably not more than 4% by weight and still more preferably not more than 3% by weight of the composition.

The polymer coagulant is preferably selected from neutral and/or anionically modified adsorbing polymers. The most preferred polymers are poly acrylamides.

The polymer preferably has a high molecular weight of MW >100 kD. The molecular weight (MW) is typically less than 5000 kD, more preferably less than 2000 kD, still more preferably less than 1000 kD. The polymer is preferably water soluble.

For the avoidance of doubt by D (Dalton) is meant atomic mass unit (amu, the less commonly used SI unit).

The most preferred polymer is a neutral and/or anionically modified polyacrylamide polymer having molecular weight > 100kD.

### Inorganic filler

Filler according to the invention may be any inorganic material which preferably is non reactive to any other ingredients present in the system. It is typically a solid with a high density.

The inorganic filler is preferably selected from natural or synthetic clays and water insoluble inorganic salts. Preferred fillers include feldspar (KAlSi₃O₈), kaoline, bentonite and Attapulgite, as well as alumina (including silica alumina compositions) and MgO. The inorganic filler is thought to increase the number of particles. The increased particle number density results in faster floc formation. The flocs formed are also heavier due to the extra mass of the filler and therefore settle faster. Furthermore it is thought that the presence of fillers help nucleate the Al(OH)₃ or Fe(OH)₃ network formation thereby improves the sweep flocculation kinetics. Additionally due to its higher density, it is thought to increase the settling velocity of the floc and improve the overall flocculation kinetics. Furthermore the fillers are found to play a role as a carrier of functional ingredient like cationic surfactant and/or cationic polymer which is found to aid in the removal of the residual surfactant present in the system by precipitation or complexation.

The inorganic filler is present in the composition in a concentration of 5 to 35% by weight. The inorganic filler is preferably present in a concentration of at least 10% by weight and more preferably at least 15% by weight of the composition. The inorganic filler is preferably present in a concentration of not more than 30% by weight, more preferably not more than 25% by weight of the composition.

It is preferred that dolomite clay (CaMg(CO₃)₂) is not used in a large amount, preferably not more than 10% by weight of the filler material, more preferably less than 5%, still more preferably less than 1%, or even 0% by weight of the filler material. Dolomite is found to cause effervescence when producing pastes probably reacting with acidic salts present in the formulation. This happens more specifically in presence of moisture or if some formulation ingredient contains water, which is thought to hamper the clarification of some wash or rinse liquors. MgO is reactive to many compounds, as generally known to the skilled person. It may cause exothermic reaction, causing heat formation and may give processing problems in some compositions, especially in the presence of water which in turn affects the efficiency of formulation.

2:1 clays e.g. attapulgite, bentonite are known to retain more liquid in its structure which is thought to be the reason to delay the release of a cationic material in the desired time scale which affects the efficiency of formulation. Therefore, 2:1 clays are less preferred in the formulation according to the invention

Consequently, Attapulgite, MgO and/or dolomite are not preferred in a large amount, preferably not more than 10% by weight of the filler material, more preferably less than 5%, still more preferably less than 1%, or even 0% by weight of the filler material, in paste compositions.

The most preferred fillers are 1:1 clays, most preferably Kaolin or Feldspar.

### Solution of a quaternary ammonium cationic surfactant

By solution of a quaternary ammonium cationic surfactant, is meant of a solution of a quaternary ammonium cationic surfactant and/or polymers of the quaternary ammonium compounds. This is also together referred to as the quaternary ammonium compound herein below.

Although it is thought that the surfactant gets depleted by adsorbing on Al(OH)₃ or Fe(OH)₃ precipitate, it does not get completely removed as the extent of removal depends on the starting concentration in the wash liquor and/or the kinetics of removal. Therefore the treated water containing left over surfactant can not be considered to be re-usable "fresh" water in the context of the present invention. Furthermore a very low level of residual surfactant generates foam which may give an indication of a 'not clean water' to the consumers and does not meet the standard of fresh water and therefore that water may not be acceptable by them for further use in laundry process or any other household process. Therefore it is essential to remove the maximum surfactant to a level at which it does not visibly generate foam.

To meet this requirement, the quaternary ammonium compound is added to the system to remove the remaining anionic surfactant by precipitation, which has faster kinetics compared to the adsorption.

The solution of the quaternary ammonium compound is present in the composition in a concentration of 20 to 40% by weight. The cationic surfactant is preferably present in a concentration of at least 24% by weight and more preferably at least 26% by weight of the composition. The cationic surfactant is preferably present in a concentration of not more than 35% by weight, more preferably not more than 33% by weight of the composition.

The quaternary ammonium surfactants are preferably halides of Benzalkonium, Cetyl-trimethyl-ammonium, Tetradecyl-trimethyl-ammonium, Dodecyl-trimethyl-ammonium, Stearyl-trimethyl-ammonium, Octadecyl-trimethyl-ammonium, Dodecylpyridinium, Cetylpyridinium, Tetrabutyl-ammonium, Tetraheptyl-ammonium, 1,3-Decyl-2-methylimidazolium, 1-Hexadecyl-3-methyl-imidazolium, Didecyl-dimethyl-ammonium, Didecyl-dimethyl-ammonium.

Polymers of quaternary ammonium compounds are also suitable for use in the composition. Especially the class of diallyldimethylammonium halides are preferred in the context of the present invention. The most preferred compounds of this class are Polydiallyldimethylammonium chlorides (also known as PolyDADMAC). The allyl group, defined as H₂C=CH-CH₂R, in the PolyDADMAC polymers preferably has a carbon chain (R) of between 8 and 22 carbon atoms, more preferably less than 20, still more preferably less than 18 carbon atoms, or not more than 16 carbon atoms.

Polymers of quaternary ammonium compounds typically have a molecular weight of between 10 and 1000 kD, preferably between 40 and 400 kD.

The most preferred halide is chloride. Fluorides and iodides are contemplated in the context of the invention for their biocidal activity. Bromides are typically not preferred due to their toxicity.

The most preferred cationic surfactants for use in the present invention are benzalkonium chloride (BAC) and the class of PolyDADMACs.

Many commercially available quaternary ammonium cationic surfactants and polymers of the quaternary ammonium compounds are commercially available in solid lump form, often giving toxic and irritating fumes. Additionally they are typically difficult to mix and/or dissolve in a laundry liquor and difficult to process.

Therefore the quaternary ammonium compound is typically dosed in the form of a solution of the compound in water, wherein the ratio of the compound to water is in the range of 2:1 to 1:2.

### Buffer

A buffer may be incorporated in the formulation in cases where a wide pH variation in the wash liquor is found. The pH variability is observed due to various reasons like the source water quality, the variable dosage of detergent formulations, detergent formulation with different compositions and different wash habit of consumers. Therefore it is important to ensure the final pH to be maintained at a level where the soluble al remains at its minimum solubility limit and also the end ph which is similar to the source water or close to neutral.

In a preferred embodiment the buffer may be carbonate or phosphate system. It may be present in a range of between 5 to 20 % of total composition.

### Composition format

The composition is preferably in the form of a solid, preferably a powder, or a paste. Liquid compositions and gels are also contemplated in the context of the invention

In a powder format the best results are obtained when the flocculant electrolyte and the polymer coagulant are particles separately dispersed in the powder composition. When granulated in a single particle, some combinations of flocculant and coagulant may react with each other and thereby reduce their individual efficacies.

Due to the nature of the electrolyte flocculant and the polymer coagulants of the invention, the rate of dissolution of the electrolyte is typically somewhat higher than for the coagulant. This is beneficial to the invention. This effect may be further enhanced, by making the electrolyte particles smaller and/or less dense than the coagulant particles.

When the polymer coagulant is in particulate form it typically dissolves slowly. Therefore a further preferred embodiment, showing excellent results, is a product format wherein the electrolyte particles are dispersed in a paste or gel, comprising the dissolved coagulant. The best gels are obtained when the ratio of filler to the quaternary ammonium compound solution is from 2:1 to 1:1.3;

### Product format

The composition is made up of electrolyte, polymer, filler, cationic surfactant (and carbonate buffer. Electrolyte is required to remove dirt particles and reduce alkalinity of liquor. Polymer bridges between particles and increases the size of flocs so flocs can settle faster. Filler is found to increase the density of flocs which will again enhance floc settling kinetics. In a preferred embodiment, the filler is found to bind cationic surfactant and enables the composition to remain in powder format. Cationic surfactant found to precipitate anionic surfactant from the wash liquor. The buffer is for maintaining the pH of rinse liquor and treated water, thereby improving the performance.

It is observed that while storing the formulation in confined space (sachet) the bulging of sachets happen due to possible evaluation of carbon dioxide gas.

To solve this problem it is found that a dual chamber sachet, separating the electrolyte and the buffer, while the remaining ingredients may be distributed over either one of the compartments.

In one embodiment the first compartment of the sachet may contain electrolyte and optionally (part of) cationic surfactant coated filler, while the second compartment may contain the polymer, buffer and the (remaining amount of) cationic surfactant coated filler.

The surfactant coated filler is preferably divided as to maintain the similar amount of product in both sachets, but not for performance reasons.

For the best performing system, the compartment comprising the cationic surfactant is dosed first into the liquor to precipitate out anionic surfactant then iron or aluminium hydroxide precipitate should form. After that the polymer is thought to start bridging the particles.

This may be achieved by providing instructions to the users, but it may also be achieved by choosing the right particles size for the ingredients of the invention, thereby providing delayed release of some ingredients.

### Particle size distribution

To enable sequential dissolution of the materials from both sachets, even when dosed together, the particle sizes are preferably as set out below.

The particle size of the electrolyte flocculant is preferably such that the mean particle size is between 10 and 500 micro meter, preferably between 100 and 400 micrometer or even between 200 and 300 micrometer. It is even more preferred that at least 80% of the electrolyte particles (by weight) has a size of less than 500 micrometer, more preferably 90%, even more preferably 95%, or even 99% by weight. It is further preferred that at least 80% (by weight) of the electrolyte particles has a size of more than 100 micrometer, more preferably at least 90% or even at least 95%.

The particle size of polymer is preferably such that the mean particle size is between less than 150 micrometer, preferably between 10 and 150 micrometer. It is even more preferred that at least 80% of the electrolyte particles (by weight) has a size of less than 150 micrometer, more preferably 90%, even more preferably 95%, or even 99% by weight.

Without wishing to be bound by a theory, it was found that settled considerably faster when the mean particle size was smaller than 150 micrometer, than when larger particles were used.

The particle size of the filler is preferably such that the mean particle size is between 5 and 50 micrometer, preferably between 10 and 40 micrometer. It is even more preferred that at least 80% of the electrolyte particles (by weight) has a size of less than 50 micrometer, more preferably 90%, even more preferably 95%, or even 99% by weight. It is further preferred that at least 80% (by weight) of the electrolyte particles has a size of more than 5 micrometer, more preferably at least 90% or even at least 95%.

The above particle size distribution is even more preferred when the cationic surfactant, as discussed herein below, is immobilised in (or coated onto) the filler particles. This is found to provide the most stable composition.

The particle size of the buffer is ideally less than 500 micron, thus to ensure that differential segregation of a final composition does not occur.

### Water purification process

The invention further provides a process for the purification of water comprising the steps of dosing the composition according to the invention to the wash water, stirring for at least 10 sec, leaving the particle to settle, and separate the particles from the water.

For getting good results about 0.3 - 2 g of the composition according to the invention, should be dosed per litre of wash water.
It is preferred that at least 0.4 g/L is dosed, more preferably even at least 0.5 g/L. Dosing more than 1 g/L is not providing much more improvement of the purification effect, while dosing more than 2 g/L may even be detrimental to the effect obtained.

After dosing the wash water, comprising the composition must be stirred for at least 10 second, preferably at least 20 seconds, but typically not more than 1 minute. Stirring may be done with any kind of device, such as a spoon, stick or any other stirring device.

After stirring the particles are left to settle at the bottom of the container, after which the clear and purified water can be separated, e.g. decanted from the settled flocs at bottom of the container.

### Settling device

In general a bucket is used for doing laundry by hand wash, mostly in the developing countries.

In a preferred embodiment the invention provides a configuration where a configuration of settling plates is for standard size buckets is provided.

The settling plate configuration includes a means for keeping the settling plates together, e.g. a central rod, to which the plates are connected. The settling plate configuration is preferably easily removable from the bucket. Since the settling time is linearly dependent on the distance that the particles need to travel, the time required for settling with the plate configuration can be reduced by approximately a factor equal to the number of plates: t_{without plates} = t_{with plates} * nₚₗₐₜₑₛ.

The settling plate configuration typically comprises between 3 and 10 plates, preferably between 4 and 8 plates. The plates are at a distance relative to each other of between 2 and 15 cm, preferably between 4 and 10 cm.

In a further embodiment a kit is provided, comprising a bucket and the settling plate configuration, as well as at least one dose of the composition according to the invention and a set of instructions.

The bucket may further comprise a water discharge means, e.g. a stop cock or a valve or tap arrangement, at the bottom. For the avoidance of doubt, the water discharge means in the context of the invention has at least 2 states, one open, and one closed. This will enable water to be drained from the bucket into another container when the bucket is placed at elevated height over another container.

### Examples

The invention will now be illustrated by means of the following non-limiting examples.

### Example 1: Effect of the filler

Settling experiments we done for the composition according to the invention compared to the same composition without the filler material.

A model wash liquor was made and contained 0.4 g/L soda, 0.3 g/L Sodium linear alkylbenzene sulphonate.

### Method

1 litre of the wash liquor was taken in a 30 cm height measuring cylinder with 7.35 cm diameter.

The composition according to the invention (example 1) was compared to the same composition, but without filler (comparative example A)

### Compositions

| | PAC (g) | Neutral polymer (g) | An-ionic polymer (g) | Filler (g) | BAC (50% solution) (g) |
|---|---|---|---|---|---|
| Example 1 | 0.6 | 0.01 | 0.01 | 0.5 | 0.24 |
| Comparative A | 0.6 | 0.01 | 0.01 | 0 | 0.24 |

The neutral polymer was polyacrylamide (PAM, Mw = 1000-2000 kD) and the anionic polymer was anionically modified PAM (Mw = 1000-2000 kD), PAC was polyaluminium chloride (B=60) and BAC was benzalkonium chloride; the filler was feldspar.

In the experiment the BAC solution was dosed first to the wash liquor and stirred for 5 sec, before the remaining ingredients were dosed to the wash liquor and stirred for 30 secs with the help of hand stirrer (made up of plastic material).

The time for settling to the bottom of the cylinder (ca 20 cm) was measured.

### Results

| | Settling time (sec) |
|---|---|
| Example 1 | 305 |
| Comparative A | 601 |

The results demonstrate that the composition according to the invention (example 1) provides faster settling flocs than the comparative example A.

The settling profile for example 1 and comparative example A are shown in the table below.

**Example 1**

| Time | Height | Velocity |
|---|---|---|
| secs | cm | cm/sec |
| 12 | 0.5 | 0.0417 |
| 30 | 1 | 0.0333 |
| 40 | 2 | 0.0500 |
| 47 | 2.5 | 0.0532 |
| 55 | 4 | 0.0727 |
| 69 | 5 | 0.0725 |
| 78 | 6 | 0.0769 |
| 87 | 7 | 0.0805 |
| 95 | 8 | 0.0842 |
| 103 | 9 | 0.0874 |
| 118 | 12 | 0.1017 |
| 130 | 13 | 0.1000 |
| 149 | 15 | 0.1007 |
| 159 | 16 | 0.1006 |
| 170 | 17 | 0.1000 |
| 186 | 18 | 0.0968 |
| 220 | 19 | 0.0864 |
| 305 | 20 | 0.0656 |

**Comparative example A**

| Time | Height | Velocity |
|---|---|---|
| secs | cm | cm/sec |
| 60 | 1.5 | 0.0250 |
| 77 | 2 | 0.0260 |
| 107 | 2.5 | 0.0234 |
| 122 | 3 | 0.0246 |
| 134 | 3.5 | 0.0261 |
| 148 | 4 | 0.0270 |
| 160 | 4.5 | 0.0281 |
| 170 | 5 | 0.0294 |
| 183 | 5.5 | 0.0301 |
| 190 | 6 | 0.0316 |
| 197 | 6.5 | 0.0330 |
| 205 | 7 | 0.0341 |
| 216 | 7.5 | 0.0347 |
| 225 | 8 | 0.0356 |
| 232 | 8.5 | 0.0366 |
| 241 | 9 | 0.0373 |
| 253 | 10 | 0.0395 |
| 273 | 11 | 0.0403 |
| 293 | 12 | 0.0410 |
| 314 | 12 | 0.0382 |
| 346 | 14 | 0.0405 |
| 378 | 15 | 0.0397 |
| 426 | 16 | 0.0376 |
| 482 | 17 | 0.0353 |
| 601 | 18 | 0.0300 |

The tables above show the settling profile for example 1 and comparative example A, and shows not only that the example provides faster settling, but also that the velocity profile shows a peak velocity, while the velocity profile in the comparative test is more or less constant throughout the settling process.

### Example 2: Foam control

In this example the foam reducing effect of compositions comprising a cationic surfactant is demonstrated.

An artificial consumer rinse liquor was prepared, containing soil, surfactant, soda, electrolyte and hardness ions.

The rinse liquor s a mixture of soil and water, as follows:
(A) 0.25 g/L model soil which is a mixture of 90% Clay, 5% Silica, 2.5 % Carbon soot, 1.25% Fe₂O₃ and 1.25% Fe₂O₄;
(B) 1 g/L Wheel Lemon and Jasmine detergent powder (July 2010, ex Unilever, India), comprising ∼10% surfactant, ∼25% Soda, ∼50% electrolyte and resit ∼15 % is minor ingredients); and
(C) water of 6 fH (2:1)=(Ca:Mg); fH is French hardness.

The rinse liquor was characterised as follows:

| | |
|---|---|
| Turbidity | ∼400 NTU |
| Anionic surfactant | ∼92 ppm |
| pH | ∼10.5 |
| Foam | 0 min-45 ml |
| | 5 min-40 ml |

Foam was measured using cylinder shake method: 40 ml of solution was poured in 250 ml glass cylinder which was closed by a stopper. The cylinder was shaken 10 times and the foam volume was measured above 40 ml of solution height at 0 min and after 5 mins.

The following formulations were compared.

| | PAC (g) | Neutral polymer (g) | An-ionic polymer (g) | Filler (g) | BAC (50% solution) (g) |
|---|---|---|---|---|---|
| Example 2 | 0.2 | 0.005 | 0.005 | 0.5 | 0.12 |
| Comp B | 0.2 | 0.005 | 0.005 | 0.5 | 0 |

The compositions of example 2 and comparative example B were added to the rinse liquor. The liquor was stirred for 30 secs, was given one minute without disturbing, then stirred again for 30 secs and left undisturbed for 5 mins.

For example 2, BAC was again added first to the rinse liquor, stirred for 5 sec and then the ingredients were added together.

| | pH | Turbidity (NTU) | Surfactant loss % | Foam, ml | |
|---|---|---|---|---|---|
| | | | | 0 min | 5 min |
| Example 2 | ∼7.3 | <10 | ∼83 | 5 | 0 |
| Comp B | ∼7.3 | <10 | ∼33 | 30 | 25 |

The results show that foam is completely removed with the composition of Example 2, while it is not removed in comparative example B, due to the respective surfactant removal percentages.

### Example 3: Effect of release of the cationic before the other ingredients

In example 3, BAC was dosed before the other ingredients, in example 4, BAC was dosed together with the other ingredients and in Comparative example C, BAC was added 5 sec after the other ingredients

| | PAC (g) | Neutral polymer (g) | An-ionic polymer (g) | Filler (g) | BAC (50% solution) (g) |
|---|---|---|---|---|---|
| Example 3 | 0.2 | 0.005 | 0.005 | 0.5 | 0.12 |
| Example 4 | 0.2 | 0.005 | 0.005 | 0.5 | 0.12 |
| Comp C | 0.2 | 0.005 | 0.005 | 0.5 | 0.12 |

| | Turbidity, (NTU) | | Cationic dosing | | |
|---|---|---|---|---|---|
| Example 3 | <10 | | Before other ingredients | | |
| Example 4 | <10 | | Together with other ingredients | | |
| Comp C | 55 | | After other ingredients | | |

The table above shows that the sequence of addition affects the performance of the invention.

### Example 4: effect of the particle size of the polymer

Commercially available anionically modified PAM polymer was sieved through a sieve stack. The results are shown in the table below.

| BSS Seive no | Particle size, micron | Weight in g | Fraction |
|---|---|---|---|
| 10 | 1680 | 0 | 0 |
| 12 | 1400 | 0 | 0 |
| 18 | 850 | 118 | 3 |
| 30 | 500 | 2120 | 55 |
| 60 | 250 | 626 | 16 |
| 100 | 150 | 664 | 17 |
| bottom | <150 | 293 | 8 |

Flocculation experiments were done as in example 1, using a cylinder with 30 cm height and 7.2 cm diameter. The same experiment as in example 1 was done, with two different sieve fractions:
Fraction 1: <150 micrometer
Fraction 2: >500 micrometer

The settling time is given in the table below:

| | Time |
|---|---|
| Fraction 1 (<150 micron) | 40-45 sec |
| Fraction 2 (>500 micron) | 90-100 sec |

The table above shows that the fraction of polymer particles with a size of less than 150 micrometer, gives better settling than the larger fraction.

### Example 5: filler coated with cationic surfactant

Two sizes of filler particles (Feldspar) were compared to define the best settling results.

Feldspar A, with a fine particle size, and Feldspar B with a coarser particle size. Both particle mixed were then coated with the cationic material.

| Feldspar A | | Feldspar B | |
|---|---|---|---|
| PSD | Particle size, micron | PSD | Particle size, micron |
| d (10) | 0.96 | d (10) | 7.56 |
| d (50) | 2.82 | d (50) | 20.11 |
| d (90) | 4.87 | d (90) | 42.39 |

The feldspar is taken in plough shear mixer (PSM); to this 50 % solution of BAC in water is sprayed at 1.5-2 kg pressure, at room temperature. Spraying and mixing of BAC with feldspar is done for 2 mins.

**PSD of BAC coated feldspar when feldspar A and B used.**

| Particle size, micron | Coating on Feldspar-A | Coating on Feldspar-B |
|---|---|---|
| <180 | 80.78 | 77.9 |
| 180-250 | 2.11 | 2.31 |
| 250-355 | 6.38 | 3.24 |
| 355-500 | 7.72 | 4.04 |
| 500-710 | 3 | 8.16 |
| 710-1000 | 0 | 4.36 |
| 1000-1400 | 0 | 0.00 |

**PSD of <180 micron particles for BAC coated feldspar when feldspar A and B used.**

| | | |
|---|---|---|
| | | |
| < 25 | 53.33 | 8.3 |
| < 50 | 67.28 | 36.68 |
| < 75 | 74.46 | 61.62 |
| < 100 | 78.46 | 72.02 |
| < 125 | 80.35 | 75.15 |

Thus, sieving of BAC coated feldspar needs to be done to remove higher cut of particles. It was found that even though the particle size of BAC coated feldspar with feldspar A was smaller, it was also found to be blocking the sieves. While drying BAC coated feldspar with feldspar A, Granule formation was found to occur which increased higher load particle size. This also increased drying time. Thus Feldspar B is preferred.

It is further found that when this experiment was repeated in a Sigma type mixer or a ribbon blender, the coating was found to be less uniform coating and some lump formation was found. Lump formation is known to lead to increasing crushing load and drying time while processing, and is therefore somewhat less preferred.

## Claims

1. Process for water purification comprising:
a. dosing a water clarification composition to household water, the composition comprising:
i. 30-70% by weight of an electrolyte flocculant selected from aluminium and ferric salts;
ii. 0.5-5% by weight of a neutral and/or anionically modified polymer coagulant (MW > 100 kD);
iii. 15-35% by weight of an inorganic filler, having a density of at least 1.5 kg/dm³;
iv. 5-20% by weight of a buffer; and
v. 20-40% by weight of a solution of a quaternary ammonium cationic surfactant and/or polymers of quaternary ammonium compounds;
wherein the composition is distributed over a dual compartment sachet, wherein a first compartment comprises the electrolyte, and the second compartment comprises the buffer, while the other ingredients may be in either one of the compartments.

2. A process according to claim 1, wherein the composition is filled into a dual chamber sachet, and wherein a first chamber comprises the quaternary ammonium cationic solution and the remaining ingredients are in a second chamber.

3. A process according to anyone of the preceding claims, wherein the mean particle size of the filler is between 5 and 50 micrometer.

4. A process according to anyone of the preceding claims, wherein the cationic surfactant is immobilised in or coated onto the filler particles.

5. A process according to anyone of claims 1 to 4, wherein the quaternary ammonium surfactants are halides of Benzalkonium, Cetyl-trimethyl-ammonium, Tetradecyl-trimethyl-ammonium, Dodecyl-trimethyl-ammonium, Stearyl-trimethyl-ammonium, Octadecyl-trimethyl-ammonium, Dodecylpyridinium, Cetylpyridinium, Tetrabutyl-ammonium, Tetraheptyl-ammonium, 1,3-Decyl-2-methyl-imidazolium, 1-Hexadecyl-3-methyl-imidazolium, Didecyl-dimethyl-ammonium, Didecyl-dimethyl-ammonium.

6. A process according to anyone of claims 1 to 4, wherein the polymers of quaternary ammonium compounds are selected from the class of diallyldimethylammonium halides

7. A process according to claim 6, wherein the polymers are selected from polydiallyldimethylammonium halides, having an allyl group, defined as H₂C=CH-CH₂R, wherein the carbon chain (R) is between 8 and 22 carbon atoms

8. A process according to anyone of claims 6 or 7, wherein the polymers of quaternary ammonium compounds have a molecular weight of between 10 and 1000 kD.

9. Process for water purification of wash water according to any one of the preceding claims comprising the steps of
a. dosing 0.3-2 g of the composition per liter of wash water
b. stirring for at least 10 sec
c. leaving the particle to settle
d. separate the particles from the water.

10. Kit comprising
a. A bucket;
b. A separator plate configuration;
c. At least one dose of the composition according to the process of anyone of claims 1 to 8; and
d. Instructions for use.

11. A kit according to claim 10, where in the bucket further comprises a water discharge means.

## Patentansprüche

1. Verfahren zur Reinigung von Wasser, umfassend:
a. Dosieren einer Wasserklärungszusammensetzung zu Haushaltswasser, wobei die Zusammensetzung umfasst:
i. 30-70 Gewichts-% eines Elektrolytflockungsmittels, ausgewählt unter Aluminium- und Eisen-Salzen,
ii. 0,5-5 Gewichts-% eines neutralen und/oder anionisch modifizierten polymeren Koagulationsmittels (MW > 100 kD),
iii. 15-35 Gewichts-% eines anorganischen Füllstoffs mit einer Dichte von mindestens 1,5 kg/dm³,
iv. 5-20 Gewichts-% eines Puffers und
v. 20-40 Gewichts-% einer Lösung eines kationischen quaternären Ammonium-Tensids und/oder Polymers von quaternären Ammoniumverbindungen,
wobei die Zusammensetzung über einen Doppelkammerbeutel verteilt ist, wobei eine erste Kammer den Elektrolyten und die zweite Kammer den Puffer umfasst, während die anderen Bestandteile in irgendeiner der Kammern vorliegen können.

2. Verfahren nach Anspruch 1, wobei die Zusammensetzung in einen Doppelkammerbeutel gefüllt wird und wobei eine erste Kammer die kationische quaternäre Ammonium-Lösung umfasst und die verbleibenden Bestandteile in einer zweiten Kammer vorliegen.

3. Verfahren nach irgendeinem der vorhergehenden Ansprüche, wobei die mittlere Partikelgröße des Füllstoffs zwischen 5 und 50 Mikrometern liegt.

4. Verfahren nach irgendeinem der vorhergehenden Ansprüche, wobei das kationische Tensid in den Füllstoffpartikeln immobilisiert oder darauf aufgetragen ist.

5. Verfahren nach irgendeinem der Ansprüche 1 bis 4, wobei die quaternären Ammonium-Tenside Halogenide von Benzalkonium, Cetyltrimethylammonium, Tetradecyltrimethylammonium, Dodecyltrimethylammonium, Stearyltrimethylammonium, Octadecyltrimethylammonium, Dodecylpyridinium, Cetylpyridinium, Tetrabutylammonium, Tetraheptylammonium, 1,3-Decyl-2-methylimidazolium, 1-Hexadecyl-3-methylimidazolium, Didecyldimethylammonium sind.

6. Verfahren nach irgendeinem der Ansprüche 1 bis 4, wobei die Polymere der quaternären Ammoniumverbindungen aus der Klasse von Diallyldimethylammonium-Halogeniden ausgewählt sind.

7. Verfahren nach Anspruch 6, wobei die Polymere unter Polydiallyldimethylammonium-Halogeniden ausgewählt sind, die eine Allylgruppe aufweisen, die als H₂C=CH-CH₂R definiert ist, wobei die Kohlenstoffkette (R) zwischen 8 und 22 Kohlenstoffatome aufweist.

8. Verfahren nach irgendeinem der Ansprüche 6 oder 7, wobei die Polymere der quaternären Ammoniumverbindungen ein Molekulargewicht zwischen 10 und 1000 kD aufweisen.

9. Verfahren zur Wasserreinigung von Waschwasser nach irgendeinem der vorhergehenden Ansprüche, umfassend die Schritte
a. Dosieren von 0,3-2 g der Zusammensetzung pro Liter des Waschwassers,
b. Rühren für mindestens 10 Sekunden,
c. Absetzenlassen der Partikel,
d. Abtrennen der Partikel von dem Wasser.

10. Kit, umfassend:
a. einen Behälter,
b. eine Trennplattenkonfiguration,
c. mindestens eine Dosis der Zusammensetzung nach dem Verfahren irgendeines der Ansprüche 1 bis 8 und
d. Gebrauchsanweisung.

11. Kit nach Anspruch 10, wobei der Behälter des Weiteren ein Wasserabflussmittel umfasst.

## Revendications

1. Procédé de purification de l'eau comprenant :
a. le dosage d'une composition de clarification de l'eau à ajouter à une eau domestique, la composition comprenant :
i. de 30 à 70 % en poids d'un floculant constitué d'un électrolyte choisi parmi l'aluminium et les sels ferriques ;
ii. de 0,5 à 5 % en poids d'un coagulant constitué d'un polymère neutre et/ou anioniquement modifié (PM> 100 kD) ;
iii. de 15 à 35 % en poids d'une charge inorganique, ayant une densité d'au moins 1,5 kg/dm³ ;
iv. de 5 à 20 % en poids d'un tampon ; et
v. de 20 à 40 % en poids d'une solution d'un tensioactif cationique à base d'ammonium quaternaire et/ou de polymères de composés à base d'ammonium quaternaire ;
dans lequel la composition est répartie dans un sachet à double compartiment, dans lequel un premier compartiment comprend l'électrolyte, et le second compartiment comprend le tampon, tandis que les autres ingrédients peuvent être dans l'un ou l'autre des compartiments.

2. Procédé selon la revendication 1, dans lequel la composition est chargée dans un sachet à double chambre, et dans lequel une première chambre comprend la solution cationique à base d'ammonium quaternaire et les ingrédients restants sont dans une seconde chambre.

3. Procédé selon l'une quelconque des revendications précédentes, dans lequel la taille moyenne des particules de la charge se situe entre 5 et 50 micromètres.

4. Procédé selon l'une quelconque des revendications précédentes, dans lequel le tensioactif cationique est immobilisé dans ou revêtu sur les particules de la charge.

5. Procédé selon l'une quelconque des revendications 1 à 4, dans lequel les tensioactifs à base d'ammonium quaternaire sont des halogénures de benzalkonium, de cétyl-triméthyl-ammonium, de tétradécyl-triméthyl-ammonium, de dodécyl-triméthyl-ammonium, de stéaryl-triméthyl-ammonium, d'octadécyl-triméthyl-ammonium, de dodécylpyridinium, de cétylpyridinium, de tétrabutyl-ammonium, de tétraheptyl-ammonium, de 1,3-décyl-2-méthyl-imidazolium, de 1-hexadécyl-3-méthyl-imidazolium, de didécyl-diméthyl-ammonium, de didécyl-diméthyl-ammonium.

6. Procédé selon l'une quelconque des revendications 1 à 4, dans lequel les polymères de composés à base d'ammonium quaternaire sont choisis parmi la classe des halogénures de diallyldiméthylammonium.

7. Procédé selon la revendication 6, dans lequel les polymères sont choisis parmi les halogénures de polydiallyldiméthylammonium, comportant un groupe allyle, définis comme étant H₂C=CH-CH₂R, formule dans laquelle la chaîne carbonée (R) comprend entre 8 et 22 atomes de carbone.

8. Procédé selon l'une quelconque des revendications 6 ou 7, dans lequel les polymères de composés à base d'ammonium quaternaire ont un poids moléculaire situé entre 10 et 1 000 kD.

9. Procédé de purification de l'eau d'une eau de lavage selon l'une quelconque des revendications précédentes comprenant les étapes suivantes
a. dosage de 0,3 à 2 g de la composition par litre d'eau de lavage
b. agitation pendant au moins 10 s
c. décantation des particules
d. séparation des particules de l'eau.

10. Kit comprenant
a. un seau ;
b. une configuration de plaque de séparation ;
c. au moins une dose de la composition conformément au procédé selon l'une quelconque des revendications 1 à 8 ; et
d. des instructions d'utilisation.

11. Kit selon la revendication 10, dans lequel le seau comprend en outre des moyens d'évacuation de l'eau.
